(19) Europäisches Patentamt
European Patent Office
Office européen des brevets

(11) **EP 3 112 904 B1**

(12) **FASCICULE DE BREVET EUROPEEN**

(45) Date de publication et mention
de la délivrance du brevet:
**17.10.2018 Bulletin 2018/42**

(51) Int Cl.:
***G01S 19/21*** *(2010.01)*     ***G01S 5/02*** *(2010.01)*

(21) Numéro de dépôt: **16176960.9**

(22) Date de dépôt: **29.06.2016**

(54) **PROCÉDÉ DE LOCALISATION D'UNE SOURCE DE BROUILLAGE DE SIGNAUX D'UN SYSTÈME DE NAVIGATION PAR SATELLITES ET SYSTÈME ASSOCIÉ**

LOKALISIERUNGSVERFAHREN EINER SIGNALVERZERRUNGSQUELLE EINES SATELLITENNAVIGATIONSSYSTEMS, UND ENTSPRECHENDES SYSTEM

METHOD FOR LOCATING A SOURCE OF INTERFERENCE OF SIGNALS FROM A SATELLITE NAVIGATION SYSTEM AND SYSTEM THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2015 FR 1501416**

(43) Date de publication de la demande:
**04.01.2017 Bulletin 2017/01**

(73) Titulaire: **Thales**
**92400 Courbevoie (FR)**

(72) Inventeur: **Revol, Marc**
**26120 Upie (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A1- 2 410 352    DE-A1- 19 512 787**

• **BROUMANDAN A ET AL: "Direction of Arrival Estimation of GNSS Signals Based on Synthetic Antenna Array", GNSS 2007 - PROCEEDINGS OF THE 20TH INTERNATIONAL TECHNICAL MEETING OF THE SATELLITE DIVISION OF THE INSTITUTE OF NAVIGATION (ION GNSS 2007), THE INSTITUTE OF NAVIGATION, 8551 RIXLEW LANE SUITE 360 MANASSAS, VA 20109, USA, 28 septembre 2007 (2007-09-28), pages 728-738, XP056010153,**

**Description**

L'invention porte sur un procédé de localisation d'une source de brouillage de signaux d'un système de navigation par satellites et sur un système associé.

On entend par source de brouillage, une source de brouillage intentionnelle ou une source d'interférence.

Un système de navigation par satellites, ou GNSS comme acronyme de "Global Navigation Satellites System" en langue anglaise, utilise une constellation de satellites qui tournent autour de la Terre sur des orbites très précisément déterminées. Ainsi, il est possible de connaître à tout instant la position d'un satellite quelconque. Les orbites des satellites sont choisies de façon à ce qu'à toute heure, 6 à 12 satellites soient visibles en tout point de la terre. Chaque satellite émet plusieurs signaux radioélectriques de type de modulation et de fréquences déterminés. Au sol ou sur un véhicule terrien, maritime ou aérien, un récepteur reçoit les signaux émis par des satellites visibles.

Un récepteur de système de navigation par satellites embarqué mesure la durée de propagation requise pour qu'une marque horaire transmise par un satellite lui parvienne. Les marques horaires sont codées sur des ondes porteuses par la technique de modulation de phase. Chaque satellite transmet ainsi un ensemble de codes pseudo-aléatoires qui lui sont propres. Une réplique de la séquence du code est générée par le récepteur et le décalage que doit subir la réplique afin de coïncider avec le code reçu correspond à la durée de propagation du signal pour parcourir la distance satellite-récepteur. Cette durée multipliée par la vitesse de la lumière dans le milieu traversé donne une mesure de distance appelée pseudo-distance. A partir des mesures des pseudo-distances le séparant de chaque satellite visible, et de la connaissance de la position des satellites, le récepteur déduit sa position précise en latitude, longitude, et en altitude dans un repère terrestre par une résolution numérique voisine de la triangulation. A partir des mesures de phase (Doppler) des porteuses, et de la connaissance précise de la vitesse apparente des satellites, le récepteur calcule précisément la vitesse. Il peut également en déduire la date et l'heure précise dans le repère temporel du système de navigation par satellites.

La réception des signaux satellites et la précision des mesures reste très sensible, malgré l'élargissement des codes d'étalement et l'accroissement des puissances d'émission, à la présence de sources de brouillages et d'interférences.

Les services utilisant à la base les systèmes GNSS de localisation et de transfert de temps sont multiples et occupent une place importante dans l'économie et le fonctionnement infrastructures des états.

A ce titre, la protection des services GNSS vis-à-vis des sources de brouillage fait partie des impératifs des états qui devront déployer des moyens de détection et de localisation sur tout leur territoire, de façon à assurer la conformité de l'environnement de réception des signaux avec les standards d'utilisation.

L'invention proposée s'inscrit dans le cadre d'un système de surveillance étendu de la qualité de l'environnement de réception des signaux, incluant l'ensemble des constellations GNSS, dédié à la détection et à la localisation des sources d'interférence ou de brouillage susceptibles de dégrader la qualité des mesures de position, vitesse et temps fournies par les systèmes GNSS.

L'invention s'intéresse en particulier à la capacité d'utiliser les plateformes de transports ferroviaires, aériens, et maritimes, voire les transports routiers pour relaxer le maillage d'un réseau de surveillance fixe, et concentrer la surveillance autour des voies de transports de biens et de personnes.

Face aux premières démonstrations de vulnérabilités des récepteurs et à la présence de brouilleurs personnels à bas coût, les moyens classiques d'analyse du spectre des signaux GNSS sont progressivement déployés à proximité des infrastructures critiques comme les aéroports, les ports, les centre de communications, les centrales nucléaires, ...

Cependant de tels moyens (maillage du territoire national par un réseau de stations d'analyse spectrale permettant la détection de brouilleurs forts) sont relativement peu efficaces dans le cas de brouilleurs lointains à large bande, puisque le niveau de brouillage suffisant à la perturbation des signaux GNSS est bien inférieur au niveau du bruit thermique standard.

Ceci rend très difficile de détecter de faibles sources de brouillage, pourtant susceptibles de perturber le fonctionnement des récepteurs, ainsi que de prédire leurs impacts sur le fonctionnement des récepteurs utilisateurs situés au voisinage de l'antenne de l'analyseur.

De telles solutions nécessitent un nombre important de stations pour couvrir le territoire, donc un coût élevé. En outre, la zone de détection est limitée autour de chaque station. La localisation d'une source de brouillage forte est faite par croisement des niveaux mesurés sur plusieurs stations.

Il est également connu le document "Direction of Arrival Estimation of GNSS Signais Based on Synthetic Antenna Array", de BROUMANDAN A ET AL GNSS 2007- PROCEEDINGS OF THE 20TH INTERNATIONAL TECHNICAL MEETING OF THE SATELLITE DIVISION OF THE INSTITUTE OF NAVIGATION (ION GNSS 2007), THE INSTITUTE OF NAVIGATION, 8551 RIXLEW LANE SUITE 360 MANASSAS, VA 20109, USA, 28 septembre 2007 (2007-09-28), pages 728-738, XP05601 0153, portant sur un procédé de localisation d'une source de brouillage de signaux d'un système de navigation par satellites à partir de puissances détectées reçues par au moins un récepteur de signaux du système de navigation par satellites embarqué à bord d'un porteur. Ce procédé a une efficacité limitée.

Un but de l'invention est de détecter et localiser des sources de brouillage GNSS sur de larges zones, par exemple autour de voies de communication, à partir de récepteurs mobiles.

Aussi, il est proposé, selon un aspect de l'invention, un procédé de localisation d'une source de brouillage de signaux d'un système de navigation par satellites à partir de puissances détectées reçues par au moins un récepteur de signaux du système de navigation par satellites embarqué à bord d'un porteur, comprenant une estimation de la puissance du bruit en sortie de chaque récepteur selon l'angle de gisement par rapport au porteur et la distance par rapport au porteur, pour chaque satellite du système de navigation, un calcul de la somme desdites puissances estimées, et une extraction des maxima locaux en gisement et en distance, par utilisation d'une antenne à ouverture synthétique réalisant une intégration cohérente desdits signaux reçus dans la direction de chaque angle de gisement visé en utilisant le déplacement connu du porteur, dans lequel ladite estimation de la puissance du bruit en sortie de chaque récepteur utilise une pluralité d'intégrateurs cohérents et une pluralité d'intégrateurs non cohérents, de durées adaptées au temps de passage d'une source dans le faisceau de l'antenne pour différentes distances pour la pluralité d'intégrateurs non cohérents.

Un tel procédé permet d'obtenir une cartographie des sources de brouillage à proximité de voies de communication susceptibles de perturber la navigation des mobiles, en profitant du déplacement du récepteur pour réaliser une localisation spatiale de ces sources.

Ainsi, il est possible de réaliser une trajectographie des sources sans avoir à déployer une antenne à traitement spatial complexe, sur la base d'une antenne de réception GNSS standard.

Dans un mode de mise en oeuvre, ladite estimation comprend une correction la phase de porteuse dudit signal correspondant au déplacement du porteur projeté orthogonalement dans la direction de chaque angle de gisement visé, en phase d'acquisition ou en phase de poursuite.

Ainsi, le déplacement du porteur est mis à profit pour réaliser une poursuite en angle et distance des cibles en exploitant leur vitesse de défilement.

Selon un mode de mise en oeuvre, ladite correction comprend une détermination d'un vecteur vitesse de déplacement du porteur.

Ainsi, la connaissance de la vitesse de déplacement du porteur permet à la fois de reconstituer une antenne synthétique pour viser simultanément dans différentes directions permettant de surveiller l'espace environnant le porteur en déplacement ainsi que de réaliser une trajectographie des cibles une fois détectées.

Dans un mode de mise en oeuvre, ladite détermination d'un vecteur vitesse de déplacement du porteur comprend une synchronisation en temps pour relever la trajectoire de référence du porteur et appliquer des corrections de déplacement nécessaires pour réaliser une antenne synthétique, aux instant de réception des signaux du système de navigation par satellites.

Ainsi, les signaux sont maintenus à phase stationnaire sur une durée compatible de la longueur apparente de l'antenne synthétique et de chacune de ses directions de visée.

Selon un mode de mise en oeuvre, ladite détermination d'un vecteur vitesse de déplacement du porteur utilise des données fournies par un récepteur de signaux d'un système de navigation par satellites et/ou des données fournies par une centrale inertielle.

Ainsi, le système de localisation des sources de brouillage est autonome et peut facilement s'adapter à différents types de porteurs.

Il est également proposé, selon un autre aspect de l'invention, un système de localisation d'une source de brouillage de signaux d'un système de navigation par satellites à partir de puissances détectées reçues par au moins un récepteur de signaux du système de navigation par satellites embarqué à bord d'un porteur, comprenant un calculateur configuré pour effectuer une estimation de la puissance du bruit en sortie de chaque récepteur selon l'angle de gisement par rapport au porteur et la distance par rapport au porteur, pour chaque satellite u système de navigation, un calcul de la somme desdites puissances estimées, et une extraction des maxima locaux en gisement et en distance, par utilisation d'une antenne à ouverture synthétique réalisant une intégration cohérente desdits signaux reçus dans la direction de chaque angle de gisement (de visé) en utilisant le déplacement connu du porteur. Ladite estimation de la puissance du bruit en sortie de chaque récepteur utilisant une pluralité d'intégrateurs cohérents et une pluralité d'intégrateurs non cohérents, de durées adaptées au temps de passage d'une source dans le faisceau de l'antenne pour différentes distances pour la pluralité d'intégrateurs non cohérents.

Dans un mode de réalisation, le système de localisation des sources de brouillage comprend des moyens de poursuite des pistes selon les angles en gisement et trajectographie par azimétrie de ces pistes.

On entend par azimétrie la méthode, principalement appliquée dans les domaines radar et sonar, qui permet grâce à l'évolution des mesures d'azimut et à la connaissance de la trajectoire de l'antenne de réception aux mêmes instants, de remonter à la localisation de la source du signal, sous certaines hypothèses de déplacements simples (fixe, mouvement rectiligne uniforme).

L'invention sera mieux comprise à l'étude de quelques modes de réalisation décrits à titre d'exemples nullement limitatifs et illustrés par les dessins annexés sur lesquels :

-  la figure 1 illustre schématiquement un mode de réalisation d'un système selon un aspect de l'invention; et
-  la figure 2 illustre schématiquement le fonctionnement du système, selon un aspect de l'invention.

Sur l'ensemble de figures, les éléments ayants les mêmes références sont similaires.

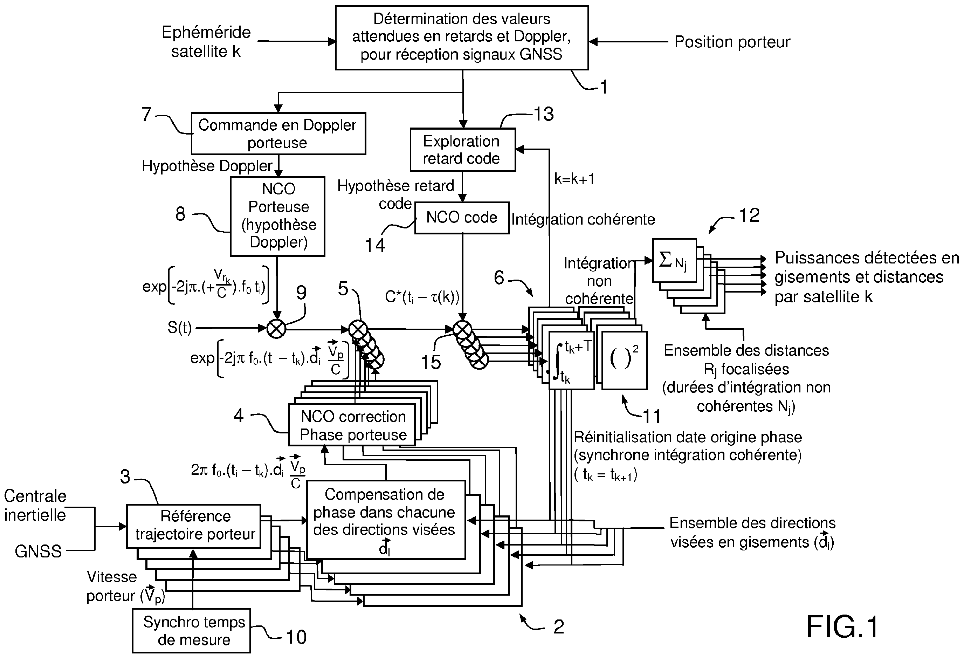

La figure 1 représente schématiquement une implémentation de la présente invention.

Le traitement spatial pour la formation des voies directives est basé sur celui de l'antenne synthétique en réception, comme décrit dans le brevet français FR2962812 B1.

Le traitement d'antenne synthétique permet de réaliser des intégrations cohérentes des signaux reçus, spatialement, par exploitation du déplacement du porteur, supposé connu. Le principe de base consiste à compenser le mouvement du porteur projeté sur les directions attendues du signal supposé stationnaire, de façon à conserver une phase stationnaire pendant la durée d'intégration.

Il est donc possible de définir les angles de visée de l'antenne correspondant aux directions dans lesquelles on veut réaliser la détection des signaux.

La fonction du traitement spatial est de réaliser une couverture complète des angles en gisement (360°) par rapport à l'axe de déplacement du porteur, grâce à des faisceaux de directivité de l'antenne synthétique se recoupant à -3dB les uns des autres.

Ces faisceaux sont réalisés en parallèle et en continu.

Le récepteur GNSS étant accordé sur les fréquences des signaux des satellites, on ne s'intéresse qu'aux sources d'interférence susceptibles d'être reçues au voisinage de ces fréquences de réceptions.

Cependant, les Doppler relatifs dépendant des satellites, le traitement spatial est mené de façon adapté à chaque satellite poursuivi. Selon les capacités de calcul du récepteur GNSS, il est possible d'envisager de cumuler les sorties de détection des traitements spatiaux sur l'ensemble ou seulement sur une partie des satellites poursuivis.

L'estimation de la distance de la source de brouillage est réalisée par adaptation de la durée d'intégration non cohérente de la chaîne de détection dans chacune des voies de visée de l'antenne synthétique, en gisement, en fonction de la vitesse de défilement de la cible dans la voie, pour différentes hypothèses de distances.

La durée d'intégration est déterminée par la vitesse du porteur, la largeur et la direction en gisement de la voie, et bien sûr des hypothèses de distance de la source de brouillage. A chaque voie est donc associée une batterie d'intégrateurs non cohérents spécifique à la direction en gisement de la voie.

L'intégration non cohérente (qui permet l'adaptation en distance) est lui-même précédé d'une étape d'intégration cohérente, sur une durée élémentaire constante et identique pour toutes les voies, qui permet de reconstituer l'étalement apparent (taille) de l'antenne, sur la durée de l'intégration cohérente.

Ce traitement d'intégration cohérente permet ainsi de fournir une estimation du champ de puissance du signal en gisement, réactualisée à chaque période d'intégration cohérente. L'intégration non cohérente permet de cumuler le champ de puissance sur des durées correspondant au temps de passage de la cible sous diverses hypothèses d'angle et de distance, pour la vitesse courante du porteur, ceci sous l'hypothèse que la trajectoire reste rectiligne pendant la durée d'intégration non cohérente, ou encore sous condition de réaliser l'accumulation non cohérente des puissances selon des directions stables en azimut (donc après compensation de la variation de direction de déplacement du porteur).

La figure 1 représente le principe d'application de l'antenne à ouverture synthétique pour la détection et localisation des sources de brouillage et/ou d'interférence.

L'intégration cohérente est réalisée en tenant compte du déplacement du porteur.

Il est effectué une détermination 1 des valeurs attendues en retard et Doppler pour réception de signaux GNSS. Cette détermination des paramètres de poursuite en fréquence et distance réalise l'entretien de la valeur du Doppler de porteuse correspondant à la vitesse du satellite, calculée à partir de la position du porteur au temps courant, associée à un "top" physique ("1PPS" en entrée). Cet entretien est réalisé pour chacun des satellites du système GNSS, à partir de la connaissance des éphémérides qui permet de calculer leurs positions précises à chaque instant (fournit par 1PPS de référence) et des positions et vitesses du porteur qui peuvent être fournies par toute référence fournissant une position datée (récepteur GPS par exemple, hybridé ou non avec une inertie). Ce calcul étant spécifique à chaque satellite, il existe autant de calculs que de satellites.

Un calcul 2 de la correction de la phase de porteuse supplémentaire permet de compenser l'évolution de la phase liée au déplacement du porteur dans la direction de la voie de visée ; cette correction s'ajoute à la correction classique de Doppler du satellite pour reconstituer la direction des voies de directivité (partie supérieure gauche du schéma : NCO porteuse).

Cette évolution de phase correspond à la projection du déplacement du porteur (défini par une vitesse calculée 3 du porteur) sur la direction visée par l'antenne (il existe autant de corrections de phase que de directions visées, ceci pour chacun des satellites poursuivis).

Cette correction 2 de phase est calculée par l'expression suivante :

$$2\pi . f_0 . (t_i - t_k) . \vec{d_i} . \frac{\vec{V_p}}{C}$$

dans laquelle :

- f0 représente la fréquence du canal Doppler considéré (on procède de façon identique sur l'ensemble des K canaux doppler), en Hz;
- tk représente l'instant de début d'intégration cohérente 4 qui fournit la date d'origine de la phase, en s;
- ti représente l'instant courant, en s;

- $\vec{d_l}$ représente le vecteur unitaire de la direction du satellite vue du porteur (vecteur unitaire), en coordonnées cartésiennes ;
- $\vec{V_p}$ représente le vecteur vitesse du porteur, en m/s; et
- C représente la vitesse de la lumière, en m/s.

Cette phase est ensuite introduite et corrigée 4 par un oscillateur à commande numérique NCO de phase de porteuse qui permet de générer et entretenir un signal de correction.

Pour chaque satellite pris en compte, il existe autant d'oscillateurs à commande numérique 4 de phase de porteuse que de directions de voie en gisement.

La phase de porteuse d'un satellite est ainsi corrigée de la phase correspondant à la direction de visée, par les oscillateurs à commande numérique 4 et multiplicateurs 5.

Cette correction de phase correspond à la projection de la vitesse de déplacement du porteur dans la direction du signal reçu, ceci pendant une durée T d'intégration cohérente 6 relative à une position particulière du retard du signal local en cours de test 13. La mise en oeuvre d'une corrélation entre le signal interférent (brouilleur) et le code local synchronisé sur chacun des signaux reçus des satellites permet de réaliser une estimation précise de l'effet du signal perturbateur sur la chaine de réception du récepteur GNSS, dont la sensibilité aux sources de brouillage dépend à la fois du spectre du signal de brouillage et de l'étalement spectral de ce signal après la convolution spectrale réalisée par la corrélation avec les codes locaux. L'application des compensations de phase dans chaque direction visée est synchronisée avec l'application de l'intégration cohérente 6.

La durée T de l'intégration cohérente est déterminée par le nombre de voies gisement que l'on souhaite former. Par exemple, la génération de 16 voies en gisement, nécessite une durée d'intégration cohérente de 20 ms pour un véhicule se déplaçant à 35m/s, i.e. 126 km/h.

La synchronisation du code local (pour chacune des directions de voie) est réalisée par commande du retard de code 13 à appliquer sur la génération 14 d'un signal du code local GNSS (modulation type BPSK) par un oscillateur à commande numérique NCO code 14, et calculée à partir de l'étape 1 de détermination des valeurs attendues en retard et doppler des signaux GNSS. Cette estimation est réalisée indépendamment de celle du récepteur GNSS qui pourrait avoir été affectée par la source de brouillage.

La génération 14 du code local avec le retard attendu est faite par un générateur à commande numérique de code. Le signal reçu est multiplié par un multiplicateur 15 par le signal généré 14 par le générateur à commande numérique de code.

L'intégration non cohérente 12 est réalisée sur chaque voie en gisement, après intégration cohérente et détection quadratique 11. La puissance reçue peut être alors estimée par sommation des sorties de voie en gisement, sous l'hypothèse d'un déplacement rectiligne pendant la durée d'intégration non cohérente 12.

Pour être plus robuste aux changements de trajectoire du porteur, une variante de l'intégration non cohérente 12, il est possible de réaliser une interpolation de la puissance en sortie des voies de gisement, de façon à reconstituer une répartition de la puissance reçue stable en azimut, ceci en utilisant le cap du déplacement disponible à chaque période d'intégration cohérente. Cela nécessite au préalable une transformation de l'échelle des mesures en gisement (obtenues après intégration cohérente et quadration 6 et 11) en une échelle de mesure en azimut, ceci en utilisant le cap connu du porteur.

Cette détection est menée en parallèle dans toutes les directions de voies. Cette poursuite en parallèle de voies dont la directivité se recoupe à -3dB du lobe principal permet de réaliser une interpolation angulaire pour une localisation précise de l'angle d'incidence du signal, par recherche des maxima locaux selon les directions en gisement ou en azimut.

Après la détermination 1 des valeurs attendues en retard et Doppler pour acquisition de signaux GNSS, une commande en Doppler 7 permet de piloter la valeur de la fréquence porteuse de référence selon la valeur attendue du Doppler du signal reçu depuis chaque satellite.

La génération 8 d'un signal à la fréquence attendue du canal Doppler est faite par un oscillateur à commande numérique de porteuse. Le signal reçu S(t) est multiplié par un multiplicateur 9 par le signal généré 8 par l'oscillateur à commande numérique de porteuse.

Une synchronisation 10 en temps de mesures permet de synchroniser l'estimation 3 de trajectoire de référence du porteur sur la base de temps du récepteur par la fourniture d'une horloge commune. Le signal de sortie de la synchronisation 10 permet de déterminer la référence de trajectoire 3 du porteur, i.e. la position, la vitesse et la direction de déplacement du porteur.

En sortie de l'intégration non cohérente 12, on dispose de la puissance du signal reçue dans chacune des directions de voies en gisement et pour différentes hypothèses de défilement de la cible dans la voie, adaptée aux différentes durées d'intégration non cohérentes.

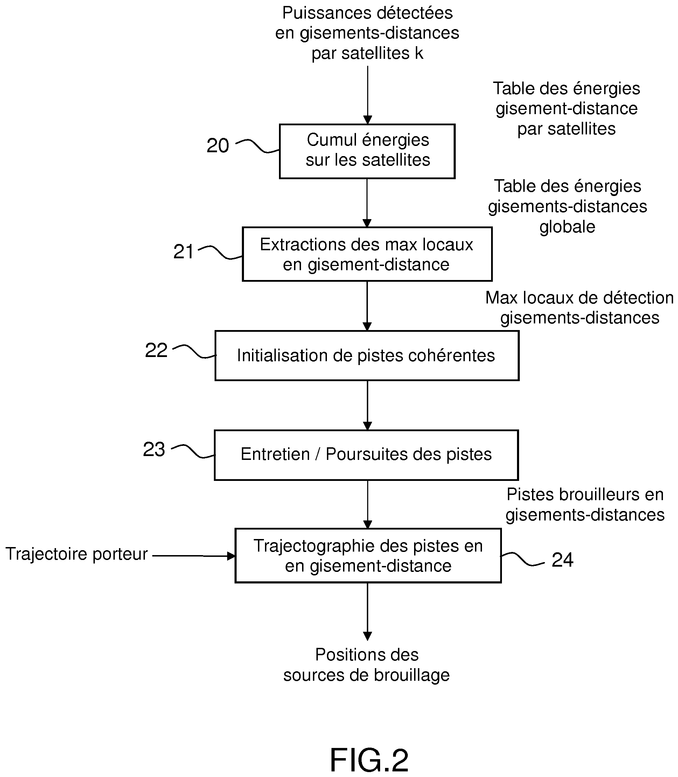

Sur la figure 2, est représentée schématiquement le procédé de localisation de sources de brouillage utilisant les sorties angle-distance du traitement de la figure 1.

A partir des puissances détectées en gisement et distance par satellite k du système GNSS, la figure 2 illustre comment est déterminée la présence d'un brouilleur et sa localisation.

La figure 1 illustre le principe de calcul de la puissance ou énergie reçue selon en gisement et distance des durées d'intégration non cohérentes Nj qui fournit une grille d'énergies reçues Ek(di, Nj) ceci par satellite k, le code généré pour la corrélation étant spécifique à chaque satellite.

Sur la figure 2 est représenté en entrée les puissances détectées en gisement et distance par satellite k, correspondant à la sortie de la figure 1.

Un cumul 20 des énergies $E_k(d_i, N_j)$ sur l'ensemble des satellites k, en utilisant une table des énergies gisement et distance par satellite k.

Ensuite, sont effectuées des extractions 21 des maxima locaux en gisement et distance en utilisant une table des énergies gisement et distance globale.

Ensuite, est effectuée une initialisation 22 de pistes de poursuite correspondant aux maxima locaux issus d'une même source de brouillage identifiée par une détection continue et cohérente en direction sur plusieurs récurrences successives; un principe d'initialisation de pistes consiste à identifier l'existence de N détections de maxima locaux dans la même direction en gisement (par exemple, sur 3 récurrences successives dans un intervalle dépendant du rapport signal à bruit du maximum local).

Puis, les pistes sont entretenues et poursuivies 23; une fois la piste initialisée, la proximité des nouveaux maxima locaux (des récurrences successives) avec chacune des pistes existantes est évaluée et le nouvel événement est associé ou non, à chaque récurrence t, selon un critère de distance dépendant de l'âge (depuis le moment d'initialisation de la piste) de la piste et du rapport signal à bruit du maximum local testé. Les maxima retenus sont alors intégrés dans un filtre récursif de type Alpha-Beta qui permet de filtrer le bruit de mesure en gisement associé à la piste et de prédire la position en gisement pour la récurrence suivante (t+1) afin de renouveler le test d'association des futurs événements. Les pistes en gisement sont ensuite converties en azimut de sorte à pouvoir visualiser l'évolution de leur défilement de façon indépendante des variations de trajectoire du porteur.

Enfin la position de l'émetteur ou des émetteurs est déterminée 24 à partir de la séquence de mesures filtrées constituant chacune des pistes 23; pour cela on suppose que la source est fixe et que la trajectoire du porteur est connue sur la durée d'observation des pistes. Plusieurs méthodes d'azimétrie angle-distance, du type de celles appliquées en radar ou sonar, peuvent être utilisées à cette fin.

Les étapes du procédé décrit ci-dessus peuvent être effectuées par un ou plusieurs processeurs programmables exécutant un programme informatique pour exécuter les fonctions de l'invention en opérant sur des données d'entrée et générant des données de sortie.

Un programme informatique peut être écrit dans n'importe quelle forme de langage de programmation, y compris les langages compilés ou interprétés, et le programme d'ordinateur peut être déployé dans n'importe quelle forme, y compris en tant que programme autonome ou comme un sous-programme, élément ou autre unité appropriée pour une utilisation dans un environnement informatique. Un programme d'ordinateur peut être déployée pour être exécuté sur un ordinateur ou sur plusieurs ordinateurs à un seul site ou répartis sur plusieurs sites et reliées entre elles par un réseau de communication.

Le mode de réalisation préféré de la présente invention a été décrit. Diverses modifications peuvent être apportées sans s'écarter de la portée de l'invention. Par conséquent, d'autres mises en oeuvre sont dans la portée des revendications suivantes.

**Revendications**

1. Procédé de localisation d'une source de brouillage de signaux d'un système de navigation par satellites à partir de puissances détectées reçues par au moins un récepteur de signaux du système de navigation par satellites embarqué à bord d'un porteur, comprenant une estimation (12) de la puissance du bruit en sortie de chaque récepteur selon l'angle de gisement par rapport au porteur et la distance par rapport au porteur, pour chaque satellite (k) du système de navigation, un calcul de la somme desdites puissances estimées, et une extraction des maxima locaux en gisement et en distance par utilisation d'une antenne à ouverture synthétique réalisant une intégration cohérente (6) desdits signaux reçus dans la direction de chaque angle de gisement en utilisant le déplacement connu du porteur, **caractérisé en ce que** ladite estimation (12) de la puissance du bruit en sortie de chaque récepteur utilise une pluralité d'intégrateurs cohérents et une pluralité d'intégrateurs non cohérents, de durées adaptées au temps de passage d'une source dans le faisceau de l'antenne pour différentes distances pour la pluralité d'intégrateurs non cohérents.

2. Procédé selon la revendication 1, dans lequel ladite estimation (12) comprend une correction (4) de la phase de porteuse dudit signal correspondant au déplacement du porteur projeté orthogonalement dans la direction de chaque angle de gisement, en phase d'acquisition ou en phase de poursuite.

3. Procédé selon la revendication 2, dans lequel ladite correction (4) comprend une détermination (10) d'un vecteur vitesse de déplacement du porteur.

4. Procédé selon la revendication 3, dans lequel ladite détermination (10) d'un vecteur vitesse de déplacement du porteur comprend une synchronisation en temps pour relever la trajectoire de référence du porteur et appliquer des corrections de déplacement nécessaires pour réaliser une antenne synthétique, aux instant de réception des signaux du système de navigation par satellites.

5. Procédé selon la revendication 3 ou 4, dans lequel ladite détermination (10) d'un vecteur vitesse de déplacement du porteur utilise des données fournies par un récepteur de signaux d'un système de navigation par satellites et/ou des données fournies par une centrale inertielle.

6. Système de localisation d'une source de brouillage de signaux d'un système de navigation par satellites à partir de puissances détectées reçues par au moins un récepteur de signaux du système de navigation par satellites embarqué à bord d'un porteur, comprenant un calculateur configuré pour effectuer une estimation (12) de la puissance du bruit en sortie de chaque récepteur selon l'angle de gisement par rapport au porteur et la distance par rapport au porteur, pour chaque satellite (k) du système de navigation, un calcul de la somme desdites puissances estimées, et une extraction des maxima locaux en gisement et en distance, par utilisation d'une antenne à ouverture synthétique réalisant une intégration cohérente (6) desdits signaux reçus dans la direction de chaque angle de gisement en utilisant le déplacement connu du porteur, **caractérisé en ce que** ladite estimation (12) de la puissance du bruit en sortie de chaque récepteur utilisant une pluralité d'intégrateurs cohérents et une pluralité d'intégrateurs non cohérents, de durées adaptées au temps de passage d'une source dans le faisceau de l'antenne pour différentes distances pour la pluralité d'intégrateurs non cohérents.

7. Système de localisation des sources de brouillage selon la revendication 6, comprenant des moyens de poursuite des pistes selon les angles en gisement et trajectographie par azimétrie de ces pistes.

**Patentansprüche**

1. Lokalisierungsverfahren einer Signalverzerrungsquelle eines Satelliten-Navigationssystems anhand von erkannten Leistungen, welche von mindestens einem Signalempfänger des Satelliten-Navigationssystems an Bord eines Trägers empfangen werden, umfassend eine Schätzung (12) der Leistung des Rauschens am Ausgang eines jeden Empfängers entsprechend dem Peilwinkel in Bezug auf den Träger und dem Abstand in Bezug auf den Träger, für jeden Satelliten (k) des Navigationssystems, eine Berechnung der Summe der geschätzten Leistungen, und eine Extraktion der lokalen Höchstwerte in Bezug auf Peilung und Entfernung durch Verwendung einer Antenne mit synthetischer Apertur, welche eine kohärente Integration (6) der empfangenen Signale in der Richtung eines jeden Peilwinkels anstellt, unter Verwendung der bekannten Bewegung des Trägers, **dadurch gekennzeichnet, dass** die Schätzung (12) der Leistung des Rauschens am Ausgang eines jeden Empfängers eine Vielzahl kohärenter Integratoren und eine Vielzahl nicht kohärenter Integratoren verwendet, mit Dauern, die der Verweildauer einer den Strahl der Antenne passierenden Quelle bei unterschiedlichen Abständen für die Vielzahl der nicht kohärenten Integratoren entsprechen.

2. Verfahren nach Anspruch 1, bei welchem die Schätzung (12) eine Korrektur (4) der Trägerphase des Signals umfasst, welche der Bewegung des Trägers entspricht, welcher rechtwinklig in die Richtung eines jeden Peilwinkels in einer Erfassungs- oder einer Verfolgungsphase projiziert wird.

3. Verfahren nach Anspruch 2, bei welchem die Korrektur (4) eine Bestimmung (10) eines Geschwindigkeitsvektors der Bewegung des Trägers beinhaltet.

4. Verfahren nach Anspruch 3, bei welchem die Bestimmung (10) eines Geschwindigkeitsvektors der Bewegung des Trägers eine Zeit-Synchronisierung beinhaltet, um die Bezugsbahn des Trägers zu messen und erforderliche Bewegungskorrekturen anzuwenden, um eine synthetische Antenne zu schaffen, jeweils zu den Zeitpunkten des Empfangs der Signale vom Satelliten-Navigationssystem.

5. Verfahren nach Anspruch 3 oder 4, bei welchem die Bestimmung (10) eines Geschwindigkeitsvektors der Bewegung des Trägers Daten verwendet, die durch einen Signalempfänger eines Satelliten-Navigationssystems bereitgestellt werden und/oder Daten, welche durch eine inertiale Messeinheit bereitgestellt werden.

6. Lokalisierungssystem einer Signalverzerrungsquelle eines Satelliten-Navigationssystems anhand von erkannten Leistungen, welche von mindestens einem Signalempfänger an Bord eines Trägers empfangen werden, beinhaltend einen Rechner, konfiguriert zum Bewerkstelligen einer Schätzung (12) der Leistung des Rauschens am Ausgang eines jeden Empfängers entsprechend dem Peilwinkel in Bezug auf den Träger und dem Abstand in Bezug auf den Träger, für jeden Satelliten (k) des Navigationssystems, einer Berechnung der Summe der geschätzten Leistungen, und einer Extraktion der lokalen Höchstwerte in Bezug auf Peilung und Abstand durch Verwendung einer Antenne mit synthetischer Apertur, welche eine kohärente Integration (6) der empfangenen Signale in der Richtung eines jeden Peilwinkels anstellt, unter Verwendung der bekannten Bewegung des Trägers, **dadurch gekennzeichnet, dass** die Schätzung (12) der Leistung des Rauschens am Ausgang eines jeden Empfängers eine Vielzahl kohärenter Integratoren und eine Vielzahl nicht kohärenter Integratoren verwendet, mit Dauern, die der Verweildauer einer den Strahl der Antenne passierenden Quelle bei unterschiedlichen Abständen für die Vielzahl der nicht kohärenten Integratoren entsprechen.

**7.** Lokalisierungssystem einer Signalverzerrungsquelle nach Anspruch 6, welches Mittel zum Verfolgen von Spuren entsprechend den Peilungswinkeln und mit Azimutmessungs-Tracking dieser Spuren beinhaltet.

## Claims

**1.** Method for locating a jamming source jamming signals of a satellite navigation system based on detected powers received by at least one receiver of signals from the satellite navigation system on board a carrier comprising an estimation (12), for each satellite (k) of the navigation system, of the power of the noise at the output of each receiver according to the bearing angle with respect to the carrier and the distance with respect to the carrier, a calculation of the sum of said estimated powers, and an extraction of the local maxima in terms of bearing and distance by using a synthetic aperture antenna carrying out a coherent integration (16) of said received signals in the direction of each bearing angle by using the known movement of the carrier, **characterized in that** said estimation (12) of the power of the noise at the output of each receiver uses a plurality of coherent integrators and a plurality of non-coherent integrators, with durations matched to the transit time of a source in the beam of the antenna for various distances for the plurality of non-coherent integrators.

**2.** Method according to claim 1, in which said estimation (12) comprises a correction (4) of the carrier phase of said signal corresponding to the movement of the carrier projected orthogonally in the direction of each bearing angle, in acquisition phase or in tracking phase.

**3.** Method according to claim 2, in which said correction (4) comprises a determination (10) of a movement speed vector of the carrier.

**4.** Method according to claim 3, in which said determination (10) of a movement speed vector of the carrier comprises a temporal synchronization in order to measure the reference trajectory of the carrier and apply movement corrections required for implementing a synthetic antenna, at the instants of reception of the signals from the satellite navigation system.

**5.** Method according to claim 3 or 4, in which said determination (10) of a movement speed vector of the carrier uses data provided by a receiver of signals from a satellite navigation system and/or data provided by an inertial unit.

**6.** System for locating a jamming source jamming signals of a satellite navigation system based on detected powers received by at least one receiver of signals from the satellite navigation system on board a carrier, comprising a computer configured to carry out an estimation (12), for each satellite (k) of the navigation system, of the power of the noise at the output of each receiver according to the bearing angle with respect to the carrier and the distance with respect to the carrier, a calculation of the sum of said estimated powers, and an extraction of the local maxima in terms of bearing and distance by using a synthetic aperture antenna carrying out a coherent integration (6) of said received signals in the direction of each bearing angle by using the known movement of the carrier, **characterized in that** said estimation (12) of the power of the noise at the output of each receiver using a plurality of coherent integrators and a plurality of non-coherent integrators, with durations matched to the transit time of a source in the beam of the antenna for various distances for the plurality of non-coherent integrators.

**7.** System for locating jamming sources according to claim 6, comprising means for tracking the paths along the bearing angles and trajectography via azimetry of these paths.

FIG.1

Puissances détectées
en gisements-distances
par satellites k

20 — Cumul énergies
sur les satellites

Table des énergies
gisement-distance
par satellites

21 — Extractions des max locaux
en gisement-distance

Table des énergies
gisements-distances
globale

22 — Initialisation de pistes cohérentes

Max locaux de détection
gisements-distances

23 — Entretien / Poursuites des pistes

Pistes brouilleurs en
gisements-distances

Trajectoire porteur ⟶ Trajectographie des pistes en
en gisement-distance — 24

Positions des
sources de brouillage

# FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2962812 B1

**Littérature non-brevet citée dans la description**

- Direction of Arrivai Estimation of GNSS Signais Based on Synthetic Antenna Array. **BROUMANDAN A et al.** GNSS 2007- PROCEEDINGS OF THE 20TH INTERNATIONAL TECHNICAL MEETING OF THE SATELLITE DIVISION OF THE INSTITUTE OF NAVIGATION (ION GNSS 2007). THE INSTITUTE OF NAVIGATION, 28 Septembre 2007, 728-738